Europäisches Patentamt

European Patent Office

Office européen des brevets

(11) Veröffentlichungsnummer: **0 223 904**
**B1**

## (12) EUROPÄISCHE PATENTSCHRIFT

(45) Veröffentlichungstag der Patentschrift:
21.03.90

(21) Anmeldenummer: 86106469.9

(22) Anmeldetag: 13.05.86

(51) Int. Cl.⁴: **B01D 53/34,** B01D 53/30,
C10K 1/10, G01N 27/416

(54) Verfahren zur Reinigung von Industriegasen oder -abgasen.

(30) Priorität: 28.09.85 DE 3534677

(43) Veröffentlichungstag der Anmeldung:
03.06.87 Patentblatt 87/23

(45) Bekanntmachung des Hinweises auf die Patenterteilung:
21.03.90 Patentblatt 90/12

(84) Benannte Vertragsstaaten:
AT BE CH DE FR GB IT LI LU NL SE

(56) Entgegenhaltungen:
EP-A- 0 169 305
DE-A- 1 523 018
DE-A- 2 254 682
FR-A- 2 267 984
US-A- 2 859 090

ARCHIV FÜR TECHNISCHES MESSEN, Nr. 403, Blatt
V 3320-F, August 1969, Seiten 189-192; K. HARSKA:
"pH-Messtechnik"

(73) Patentinhaber: Degussa Aktiengesellschaft,
Weissfrauenstrasse 9, D-6000 Frankfurt am Main 1(DE)

(72) Erfinder: Fischer, Joachim, Buchbergstrasse 3,
D-6458 Rodenbach(DE)
Erfinder: Knorre, Helmut, Dr., Ratleikstrasse 8c,
D-6453 Seligenstadt(DE)

## Beschreibung

Die Erfindung betrifft ein Verfahren zur Reinigung von Industriegasen oder Industrieabgasen, die Cyanwasserstoff, aber auch häufig Ammoniak enthalten, und in denen auch Kohlenoxide, Kohlenwasserstoffe verschiedener Struktur, Schwefelwasserstoff, Schwefeloxide sowie schwermetallhaltige Stäube anwesend sein können. Derartige Gase fallen z.B. bei Hochofenprozessen, Acrylnitrilsynthesen, Müllpyrolysen oder anderen chemischen Prozessen an und werden durch Wäsche mit wäßrigem Formaldehyd gereinigt. Die Erfindung betrifft speziell dessen elektrometrisch gesteuerte Dosierung.

Die Reinigung von Industriegasen oder -abgasen ist aus verschiedenen Gründen erforderlich. Einerseits dient sie zur Abtrennung von Stäuben aus verwertbaren Gasen, wie sie bei Hochofenprozessen oder Müllpyrolysen anfallen, andererseits müssen Abgase, wie sie z.B. bei der Acrylnitril- oder anderen chemischen Synthesen entstehen vor Abgabe in die Atmosphäre von Schadstoffen befreit werden. Die Entstaubung von Gichtgasen erfolgte früher oftmals im Durchlaufverfahren. Hierbei wurde das Waschwasser nach der Benutzung über einen Rundeindicker, der gleichzeitig als Entgiftungsbecken diente, geleitet und das klare Dekantat der Kanalisation oder einem Vorfluter zugeleitet.

Da hierbei aber sehr große Wassermengen benötigt wurden, wird derzeit das Kreislaufverfahren bevorzugt. Dabei wird das Waschwasser nach der Gaswäsche mit Flockungsmittel versetzt, über einen Rundeindicker geleitet und das klare Dekantat über Verdampfungskühler dem Waschkreislauf wieder zugeführt. Frischwasser wird nur zum Ausgleich von Verdunstungsverlusten bzw. zur Absenkung der Härte des Wassers zugegeben. Somit gelangt nur noch ein Bruchteil des Waschwassers zur Entgiftung; dieses hat aber einen wesentlich höheren Schadstoffgehalt als das Waschwasser aus dem Durchlaufverfahren. Eine pH-Einstellung der Waschwässer im Kreislauf erfolgt in den seltensten Fällen, so daß der sich zwangsläufig einstellende pH-Wert im Neutralbereich liegt. Dies hat zur Folge, daß ein Großteil des Cyanids in Form von Cyanwasserstoff aus den Verdampfungskühlern ausgetragen wird.

In der DE-A 2 460 927 wird ein zweistufiges Verfahren zur Behandlung von Gichtgaswaschwasser beschrieben, das darauf beruht, daß der Cyanidgehalt vor den Sedimentationsanlagen gemessen und zunächst 20 bis 70 % der zum stöchiometrischen Umsatz zu Glykolsäurenitril erforderliche Menge Formaldehyd zugesetzt wird. Der pH-Wert des Hochofengaswaschwassers muß hierbei in seiner Gesamtheit auf 8 bis 10 eingestellt werden.

Wesentlich für das Verfahren ist eine sehr gute Durchmischung im Zugabebereich von Formaldehyd, um eine lokale Überkonzentration an Formaldehyd zu vermeiden, die zur Reaktion mit anderen Stoffen, wie z.B. Ammoniumionen, führen würde. Überschüsse an Formaldehyd, also auch lokale Überschüsse, sollen aber auf jeden Fall vermieden werden. Darin wird eine Besonderheit des Verfahrens gesehen.

In einer zweiten Stufe wird dann nach dem Schwerkraftabscheider und Entfernen der in der ersten Stufe gebildeten Polymeren des Glykolsäurenitrils der restliche Teil der stöchiometrischen Menge an Formaldehyd, die zur Reaktion mit Cyanwasserstoff benötigt wird, zugesetzt, um komplexe Schwermetallcyanide zu entgiften. Für ein derartiges Verfahren wären aber genaue Angaben zur Steuerung der Formaldehydzugabe nötig, um z.B. die angeblich unzulässigen lokalen Überschüsse an Formaldehyd in Gegenwart reaktiver Ionen, wie z.B. Ammoniumionen, zu vermeiden. Derartige Angaben fehlen aber völlig. Sie sind jedoch im Hinblick auf den stark schwankenden Cyanidgehalt im Waschwasser von Hochofengasen, z.B. je nach dem Herstellungsverfahren für Eisen zwischen 0,1 und 202 mg $CN^-/l$ Waschwasser, notwendig, da sich eine Dosierung nach Erfahrungswerten dann nicht mehr durchführen läßt. Ganz abgesehen davon, daß auch während der Produktion selbst nicht unwesentliche Schwankungen im Cyanidgehalt auftreten können. Ein Verfahren zur Entgiftung stark cyanidhaltiger Abwässer mit einer alkalischen Formaldehydlösung, deren pH-Wert bei mindestens 8 liegt und die bevorzugt im Überschuß über die stöchiometrisch notwendige Menge eingesetzt wird, wird in der DE-A 2 119 119 beschrieben. Die Durchführung des Verfahrens ist technisch aufwendig, entweder durch mehrstündiges Erhitzen des Abwassers auf Siedetemperatur oder tagelanges Stehen bei Zimmertemperatur. In keinem der Fälle wird eine ausreichende Entgiftung erzielt. So liegt der restliche Cyanidgehalt nach zweistündigem Sieden des Abwassers bei 0,5 mg $CN^-/l$ und nach 50-stündigem Stehen bei Zimmertemperatur bei 8 mg C $N^-/l$.

Ein Verfahren zur Entgiftung hauptsächlich von Abwässern der Acrylnitrilanlagen, die dann anschließend einer biologischen Kläranlage zugeführt werden, besteht in der Verwendung einer Formaldehydlösung mit einem pH-Wert von 3 oder niedriger (DE-C 2 202 660) und zwar in molarem Überschuß; bevorzugt werden 1,5 bis 4 Mole Formaldehyd pro Mol Cyanidion eingesetzt.

Dieses kontinuierliche Verfahren läßt sich aber nur durch eine naßanalytische Bestimmung des Cyanidgehaltes im Abwasser kontrollieren, da nach Angaben in der Patentschrift die Einstellung des Gleichgewichtes so rasch erfolgt, daß sie mit einer Silberjodidelektrode nicht mehr gemessen werden kann.

Es ist den Beispielen aber nicht zu entnehmen, wie die stark schwankende Abwassermenge - es werden Mengen zwischen 20 und 40 m³/h mit Cyanidwerten von 20 bis 300 ppm genannt - problemlos ohne elektrometrische Steuerung entgiftet werden kann, jedenfalls zeigt sich aus den Beispielen, daß selbst bei Einsetzen der vierfachen Menge an Formaldehyd - bezogen auf die Cyanidkonzentration - der heute geforderte Grenzwert an Cyanidion von<0,1 mg $CN^-/l$ in keinem Fall erreicht wird. Glykolsäurenitril soll nach diesem Verfahren nicht gebildet werden, sondern es soll eine unbekannte Reaktion ablaufen, wahrscheinlich unter Bildung von Pyrimidonen.

Ziel der Erfindung ist daher ein Verfahren, bei dem Cyanwasserstoff in Gasen und/oder Gaswaschwässern durch Zudosieren von technischem, handelsüblichen Formaldehyd unter elektrometrischer Steuerung quantitativ in Glykolsäurenitril übergeführt wird, ohne daß ein größerer Überschuß an Formaldehyd, bezogen auf Cyanid, eingesetzt werden muß, worauf eine Entgiftung des Glykolsäurenitrils folgt.

Eine Steuerung der Formaldehyd-Dosierung über die direkte Messung des Redoxpotentials im Abwasser scheidet aus, da bei der Umsetzung von Formaldehyd mit Cyanid im pH-Bereich von 1 bis 12 die Beeinflussung des Redoxpotentials durch die pH-Unterschiede zu groß ist.

Es wurde nun gefunden, daß man die Reinigung von Industriegasen oder -abgasen, die Cyanwasserstoff und bevorzugt Ammoniak enthalten, und die durch eine Kreislaufwäsche mit Wasser und Formaldehyd sowie einer gleichzeitigen Oxidation des Kreislaufwassers oder anschließenden oxydativen Behandlung des aus dem Kreislauf ausgeschleusten Waschwassers, wobei in beiden Fällen eine biologische Nachreinigung angeschlossen werden kann, potentiometrisch verfolgen und steuern kann, wenn man den Formaldehyd vor dem Gaswäscher in den Gaswaschkreislauf zudosiert und die Zugabemenge über eine kontinuierliche Messung des Redoxpotentials mit einem Elektrodenpaar, bestehend aus einer Edelmetall-und einer Bezugselektrode, in einem nach dem Wäscher abgezweigten kontinuierlichen Nebenstrom (=Meßstrom), dessen pH-Wert durch Zudosieren von Lauge oder Säure auf einen konstanten Wert zwischen 7 und 10, vorzugsweise 8 bis 8,5, eingestellt wird, in Gegenwart von mindestens 1 ppb Silberionen regelt.

Die zu reinigenden Gase können noch zusätzlich Kohlenoxide Kohlenwasserstoffe verschiedener Struktur, Schwefelwasserstoff, Schwefeloxide oder schwermetallhaltige Stäube enthalten. Bevorzugt wird der Meßstrom zwischen Gaswäscher und Sedimentationseinrichtung entnommen. Dieser kleine Meßstrom, z.B. etwa 100 l/h, wird abgezweigt und durch automatisch geregelte Zudosierung von Lauge oder Säure auf den konstanten pH-Wert eingestellt. Gleichzeitig wird die Lösung einer stabilen Silberverbindung zudosiert, gegebenenfalls zusammen mit der Säure, und im Meßstrom eine Silberkonzentration von mindestens 1 ppb Silberion aufrechterhalten. Ein bevorzugter oberer Grenzwert sind 10 ppb Silberionen. Im allgemeinen reichen aber 1 ppb Silberionen zur Durchführung der Messung aus. Größere Silberkonzentrationen, z.B. 100 mg/m³, stören das Verfahren nicht, können aber zu einer nachteiligen Beeinflussung in einer biologischen Kläranlage oder einem natürlich Gewässer führen. Der Hauptstrom wird nach dem erfindungsgemäßen Verfahren hinsichtlich seines pH-Wertes nicht verändert.

Entsprechend dem im Meßstrom gemessenen Redoxpotential wird über einen elektronischen Regler mit P, PI oder PID-Verhalten eine Dosierpumpe angesteuert, die die entsprechende Menge einer handelsüblichen Formaldehydlösung in die Ringleitung des Hauptstromes vor dem Gaswäscher dosiert. Anstelle der handelsüblichen Formaldehyd-Qualitäten kann auch verdünnter oder gasförmiger Formaldehyd eingesetzt werden.

Wird zum Messen des Redoxpotentials z.B. ein Gold-Thallamid-Elektrodenpaar verwendet, so erreicht das Redoxpotential im Meßstrom einen Wert im Bereich von etwa + 400 mV ± 50 mV bis + 1000 mV ± 50 mV in einem pH-Wert-Bereich von 7 bis 10, bevorzugt 8 bis 8,5, sobald die Umsetzung des Cyanids mit dem Formaldehyd beendet ist.

Ein bevorzugter Redox-Sollwert liegt zwischen + 650 mV ± 50 mV bis +850 mV ± 50 mV, besonders bevorzugt bei + 700 mV ± 50 mV, bei einem pH-Wert von 8 bis 8,5. Wird anstelle einer Goldelektrode eine Silberlektrode eingesetzt, so liegen die Redox-Sollwerte nach Erreichen des Endproduktes der Reaktion zwischen Cyanion und Formaldehyd ca. 100 mV niedriger. Die optimale Sollwerteinstellung muß durch einen vorhergehenden Handversuch ermittelt werden. Entsprechendes gilt auch für sonstige Elektrodenpaar-Kombinationen. Durch Zudosierung der Formaldehydlösung vor dem Gaswäscher und Messung des Redoxpotentials im Meßstrom nach dem Gaswäscher wird erreicht, daß einerseits der im zu waschenden Gas enthaltene Cyanwasserstoff sofort quantitativ in Glykolsäurenitril umgewandelt wird, andererseits aber eine Reaktion des Cyanwasserstoffs mit Metallen unter Bildung schwer zu entgiftender Schwermetallcyanide vermieden wird. Außerdem kann bei hohem Gehalt an Ammoniak im Waschwasser mit Formaldehyd Hexamethylentetramin gebildet werden, das in dem Maße wieder Formaldehyd freisetzt, wie es für die Reaktion mit dem Cyanwasserstoff unter Bildung von Glykolsäurenitril benötigt wird.

Für diese Reaktion ist eine Reaktionszeit von max. 2 Minuten erforderlich, was durch die erfindungsgemäße Anordnung der Meß- und Dosierstellen in dem Verfahren stets eingehalten werden kann. Des weiteren wird auf diese Weise sichergestellt, daß im Waschkreislauf kein freier Formaldehyd vorliegt, weil durch die redoxgesteuerte Dosiermenge einerseits nur die dem Cyanidgehalt stöchiometrische Menge zudosiert und andererseits beim Vorliegen hoher NH₃-Gehalte ein unbeabsichtigter geringer Überschuß in biologisch gut abbaubares Hexamethylentetramin umgewandelt wird. Zur Zersetzung des gebildeten Glykolsäurenitrils wird eine oxidative Behandlung des Waschkreislaufes oder des aus dem Kreislauf ausgeschleusten Waschwassers durchgeführt.

Als Oxidationsmittel eignet sich vor allem Wasserstoffperoxid. Bevorzugt werden Wasserstoffperoxidlösungen in Konzentrationen von 10 bis 70 Gew. -% verwendet. Ein weiterer wichtiger Effekt, der durch das erfindungsgemäße Verfahren erzielt wird, ist die Herabsetzung des Cyanwasserstoff-Austrags aus den Verdampfungskühlern. Die bei Hüttenwerken betriebenen Kühlkreisläufe müssen zur Einhaltung einer ausreichenden Kühlwassertemperatur mit Verdampfungskühler ausgerüstet sein. Bei einem den Betriebsverhältnissen nachgestellten Laborversuch konnte festgestellt werden, daß aus einem mit 10 mg CN⁻/l beladenen Gichtgaswaschwasser ein Abgas mit 15 ppm Cyanwasserstoff resultiert, während das Abgas bei einem mit Formaldehyd behandelten Gichtgaswaschwasser gleicher Anfangscyanidkonzentration nur 2 ppm Cyanwasserstoff enthielt.

Aufgrund der Aufkonzentrierung des Waschwassers und der damit verbundenen Ablagerungen in den Gaswäschern ist es sehr günstig, ständig etwas Waschwasser aus dem Kreislauf auszuschleusen und durch Frischwasser zu ersetzen; anstelle des Waschkreislaufs wird nun dieses ausgespeiste Wasser mit Kalk oder Alkalilauge auf einen pH-Wert von 8,5 bis 12,5, vorzugsweise auf 10,5 eingestellt, und so lange potentiometrisch gesteuert, z.B. $H_2O_2$, zugesetzt, bis d as mit einem Gold-Thalliumamalgan/Thalliumchlorid-Elektrodenpaar gemessene Redoxpotential + 700 mV ± 50 mV erreicht. Der hierbei auftretende Potentialsprung kann einerseits zur Signalisierung des Endes der Entgiftungsreaktion oder bei kontinuierlicher Oxidationsmittel-Dosierung Abschaltung der Zudosierung genützt werden. Eine biologische Behandlung, z.B. in einer entsprechend adaptierten Kläranlage, kann – wie gesagt – angeschlossen werden.

Das erfindungsgemäße Verfahren ist vor allem anwendbar auf anorganische Cyanide, wie sie in Waschwässern von Hüttenbetrieben, Müllpyrolysen sowie in Betrieben anfallen, die Blausäure oder Cyanid verarbeiten oder herstellen. Da der Meßstrom an der Stelle der stärksten Cyanidionen-Konzentration des Waschwassers entnommen wird, wird die Zugabe des Formaldehyds in den Waschkreislauf vor Eintritt in den Gaswäscher stets so geregelt, daß diese Zugabe in jedem Fall auch bei wechselnden Konzentrationen an Cyanidionen ausreicht. Dies ist ein entscheidender Vorteil des erfindungsgemäßen Verfahrens. Außerdem können die Gaswäscher in pH-Wert-Bereichen betrieben werden, in denen das Kohlendioxid der Luft nicht absorbiert wird.

Bisher mußte im pH-Bereich > 13 gearbeitet werden, um eine vollständige Abtrennung des Cyanwasserstoffs und des Kohlendioxids sicherzustellen. Dies ist erforderlich, weil die Kohlensäure eine stärkere Säure als die Blausäure ist und im niedrigeren pH-Bereich bevorzugt Kohlendioxid durch das Waschwasser absorbiert wird. Somit wird nach dem erfindungsgemäßen Verfahren eine deutlich geringere Belastung des Abwassers mit Neutralsalz bewirkt, als dies bisher der Fall war. Dies ist ein grundsätzlicher Vorzug des erfindungsgemäßen Verfahrens. Der pH-Bereich des Waschwassers braucht nicht aus Gründen einer unerwünschten Absorption von Gasen, wie die Absorption des Kohlendioxids, noch aus Gründen der wirksamen Durchführung des erfindungsgemäßen Verfahrens geändert werden. Er kann in weiten Grenzen schwanken, wird aber im allgemeinen unterhalb von pH = 7 liegen. Allerdings sind in Einzelfällen, wie in der Abgasbehandlung, bei der Produktion von Ferromangan auch Werte zwischen 10 und 11 möglich.

Alle diese Abwässer können im pH-Wert unverändert für das erfindungsgemäße Verfahren eingesetzt werden. Eingestellt auf einen pH-Wert von bevorzugt 8 bis 8,5 wird nur allein der Meßstrom. Hervorgehoben werden sollte auch, daß selbst große Mengen an Ammoniumionen, Sulfidionen, wie sie bei Abwässern aus der Hüttenindustrie und Müllpyrolysen vorkommen, die Messung im Meßstrom nicht stören, (siehe zur Ermittlung des Ammoniakeinflusses auf die notwendige Formaldehydmenge die Beispiele 3 und 4). Zur weiteren Erläuterung des erfindungsgemäßen Verfahrens dienen die folgenden zwei Prinzipien zur Durchführung des Verfahrens:

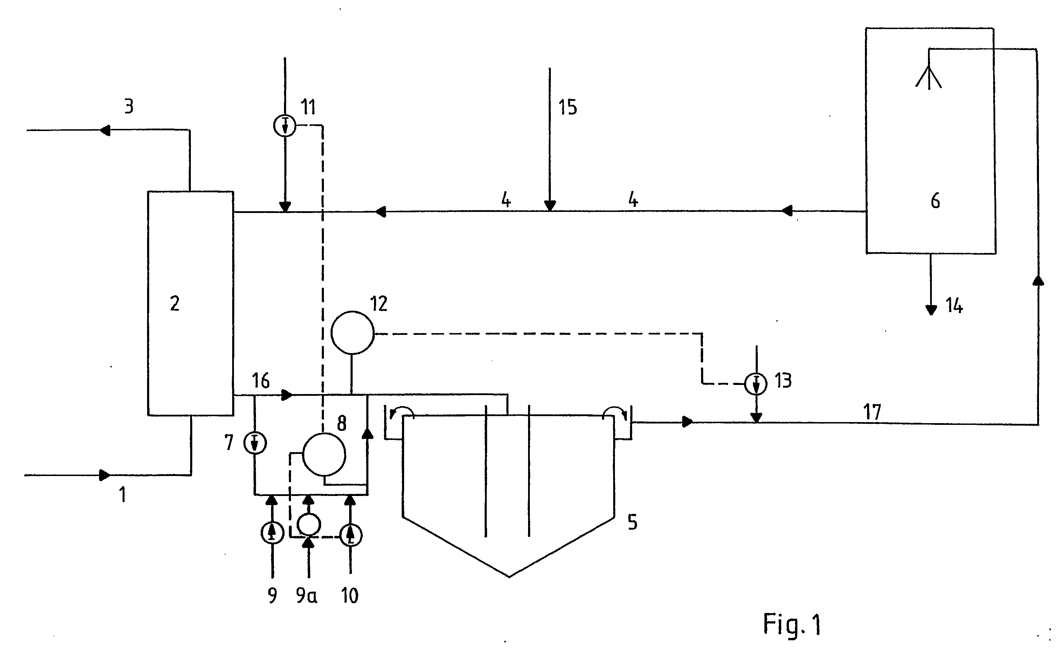

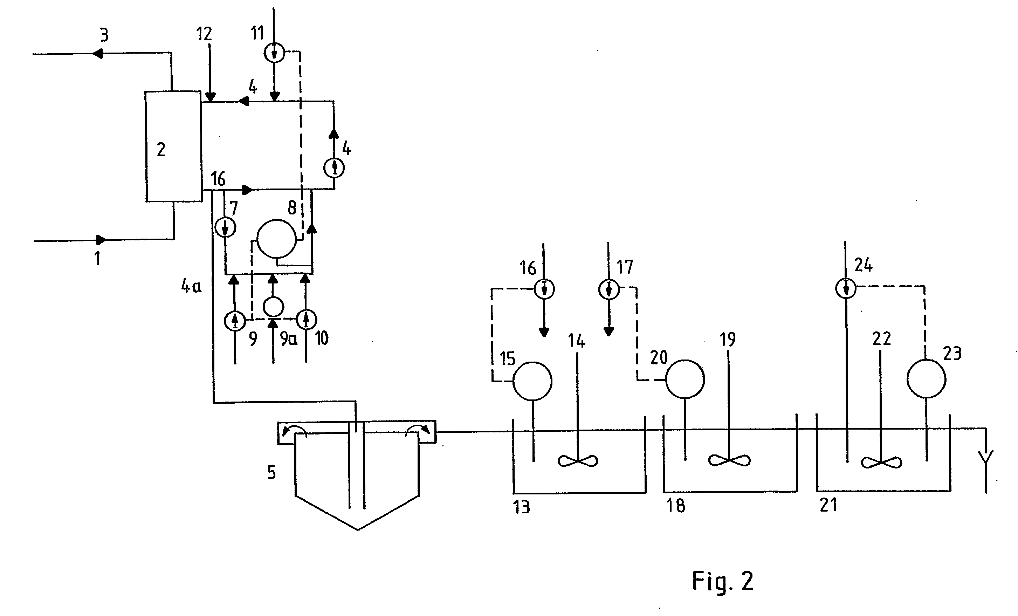

Diese beiden Durchführungsarten, siehe Abb. 1 und 2, können sowohl einzeln oder in Kombination – auf jeden vorliegenden Fall angepaßt – durchgeführt werden. So kann beispielsweise die Verfahrensweise nach Abb. 1 anstelle des Waschkreislaufes in Abb. 2, d.h. anstelle des Systems "Gaswäscher – Meßstrom – eigentlicher Waschkreislauf" treten. In diesem letzteren Fall wird dann auf eine Dosierung von Oxidationsmittel in den Waschkreislauf verzichtet. In Abb. 1 ist die Gaswäsche mit Formaldehyd und gleichzeitiger Oxidation mit Wasserstoffperoxid im Kreislaufsystem dargestellt. Das Rohgas wird über Leitung 1 dem Gaswäscher 2 von unten zugeleitet und das Reingas über Leitung 3 abgenommen. Im Gegenstrom wird das Waschwasser über Leitung 4 dem Gaswäscher 2 von oben zugeführt und über Leitung 16 abgezogen.

Die im Waschwasser enthaltenen Schwebstoffe werden in der Sedimentationseinrichtung 5, z.B. einem Rundräumer, abgetrennt und das Waschwasser darauf über Leitung 17 dem Kühler 6, z.B. einem Verdampfungskühler, zugeführt. Von dort gelangt es über Leitung 4 wieder in den Gaswäscher 2.

Der Waschkreislauf umfaßt die Leitungen 4, 16 und 17, sowie Gaswäscher 2, Sedimentationsbecken 5 und Kühler 6.

Nach dem Gaswäscher 2 wird dem Waschkreislauf ein kleiner Meßstrom 7 abgezogen und über einen Regler 8 gesteuert, durch Zugabe von Säure über Leitung 9 oder Lauge über Leitung 10 auf einen pH-Wert von z.B. 8 bis 8,5 eingestellt. Entsprechend des gemessenen Redoxpotentials und der dabei ebenfalls mit Regler 8 ermittelten Regelabweichung wird Formaldehyd über Leitung 11 in den Waschkreislauf vor Eintritt in Wäscher 2 dosiert. Die Silberverbindung, z.B. Nitrat, tritt über Leitung 9a in Meßstrom 7 ein.

Mit der Meß- und Regeleinrichtung 12 wird das Redoxpotential des im pH-Wert nicht veränderten Waschkreislaufes gemessen und entsprechend der ermittelten Regelabweichung Wasserstoffperoxid über Leitung 13 nach dem Rundräumer 5 dosiert. Die Verweilzeit im Kühler sowie im gesamten Waschkreislauf wird als Reaktionszeit zur Perhydrolyse des im Gaswäscher 2 gebildeten Glykolsäurenitrils genützt. Das aus dem Kühler 6 abgeschlämmte Wasser, das gegebenenfalls im pH-Wert verändert werden muß und über Leitung 14 abgenommen wird, wird durch Zugabe der entsprechenden Menge Frischwasser über Leitung 15 nach dem Kühler 6 ersetzt.

In Abbildung 2 ist die Gaswäsche mit Formaldehyd und separater oxidativer Behandlung des Gaswaschwassers mit Wasserstoffperoxid dargestellt. Das Rohgas wird über Leitung 1 dem Gaswäscher 2 von unten zugeleitet und das Reingas über Leitung 3 abgezogen. Im Gegenstrom wird das Waschwasser über Leitung 4 dem Gaswäscher 2 von oben zugeführt und über Leitung 4a abgezogen. Die im Waschwasser enthaltenen Schwebstoffe werden in der Sedimentationseinrichtung 5 entfernt und danach wird das Waschwasser der Entgiftungsanlage zugeführt.

Nach dem Gaswäscher 2 wird dem Waschkreislauf aus Leitung 16 ein kleiner Meßstrom 7 abgezogen und über einen Regler 8 gesteuert, durch Zugabe von Lauge über Leitung 9 oder Säure über Leitung 10, auf einen pH-Wert von 8 bis 8,5 eingestellt,unter Zugabe einer Silberverbindung über Leitung 9a.

Entsprechend des gemessenen Redoxpotentials und der dabei ebenfalls mit Regler 8 ermittelten Regelabweichung wird Formaldehyd über Leitung 11 in den Waschkreislauf, d.h. in Leitung 4, vor Eintritt in Wäscher 2 dosiert. Gleichzeitig wird vor dem Gaswäscher 2 über Leitung 12 so viel Frischwasser zugesetzt, wie durch Leitung 4a abgeschlämmt wird. Das Verhältnis des abgeschlämmten Wassers zur Menge im Waschkreislauf wird durch den Verschmutzungs- und Härtegrad des Waschwassers bestimmt. Dieses läßt sich durch einen Vorversuch feststellen.

Das aus der Sedimentationseinrichtung 5 abfließende Wasser wird zunächst dem ersten Reaktionsbecken 13 zugeleitet, das mit einem Rührer 14, einer pH-Meß- und Steuereinrichtung 15 sowie einer Laugendosierung 16 und einer $H_2O_2$-Dosierung 17 ausgerüstet ist. Hier wird der pH-Wert des zu behandelnden Abwassers – falls erforderlich – zunächst auf einen pH-Wertvon > 10,5 eingestellt. Im zweiten Reaktionsbecken 18, das mit einem Rührer 19 sowie einer Redox-Meß- und Steuereinrichtung 20 ausgerüstet ist, wird gemäß des gemessenen Redoxpotentials und der dabei festgestellten Regelabweichung die entsprechende Menge $H_2O_2$ über 17 in das erste Reaktionsbekken 13 dosiert. Die Größe der Reaktionsbecken ist hierbei so zu bemessen, dass eine – entsprechend dem Abwasserstrom – ausreichende Verweilzeit erzielt wird, um eine vollständige Perhydrolyse des Glykolsürenitrils sicherzustellen. Die potentiometrische Überwachung der Reaktion erfolgt über Regler 20.

Nachfolgend wird das oxidativ behandelte Wasser in das dritte Reaktionsbecken 21 geleitet, das mit einem Rührer 22, einer pH-Meß- und Steuereinrichtung 23 sowie einer Säuredosierung 24 ausgerüstet ist. Hier wird das Abwasser auf den für die Ableitung vorgeschriebenen pH-Wert eingestellt.

Die Erfindung wird in den folgenden Beispielen weiter erläutert:

Beispiel 1

In Beispiel 1 wird gezeigt, welche Wirksamkeit durch potentiometrisch gesteuerte Formaldehydzugabe erzielt werden kann:

Ein Waschkreislauf von 5 m³ Inhalt und einer Umwälzung von 60 m³/h hatte folgende Zusammensetzung:

| | |
|---|---|
| Direkt argentometrisch bestimmbares Cyanid | 83 mg CN⁻/l |
| Gesamtcyanid, DIN 38 405, D 13.1 | 135 mg CN⁻/l |
| freies $NH_3$ | 3800 mg $NH_3$/l |
| Gesamt $NH_3$ | 3800 mg $NH_3$/l |
| Eisen, gesamt | 46,5 mg Fe/l |

Dem Kreislauf wurden pro Stunde 2 m³ Wasser zu- und abgeführt. Durch elektrometrisch gesteuerte Zudosierung von durchschnittlich 48 kg $H_2CO$ (37 gew.-%ig) pro Stunde vor dem Gaswäscher wurden im Abwasser nach 8 Stunden Betriebszeit folgende Analysenwerte ermittelt:

| | |
|---|---|
| Direkt argentometrisch bestimmbares Cyanid | 629 mg CN⁻/l |
| freies $NH_3$ | 490 mg $NH_3$/l |
| Gesamt $NH_3$ | 3900 mg $NH_3$/l |
| Eisen, komplex gebunden | 1,2 mg Fe/l |
| Eisen, gesamt | 1,2 mg Fe/l |

Ziel dieses Versuches war es, den Cyanwasserstoff vollständig in Glykolsäurenitril umzuwandeln und das freie Ammoniak auf < 600 mg $NH_3$/l abzusenken. Das restliche $NH_3$ sollte durch die $H_2CO$-Zu-

gabe in Hexamethylentetramin umgewandelt werden. Nach den Analysendaten· hätten hierfür durchschnittlich 52,7 kg $H_2CO$ (37 gew.-%ig) eingesetzt werden müssen. Der Gehalt an Gesamtcyanid nach DIN 38 405, D 13.1, konnte nicht bestimmt werden, da das als Glykolsäurenitril vorliegende Cyanid nach dieser Analysenmethode nur unvollständig erfasst wird. Aus dem Gehalt an komplex gebundenem Eisen errechnet sich ein Gehalt von 3,35 mg $CN^-$/l als komplexes Eisencyanid. Somit ist eine Absenkung des Anfangsgehaltes von 52 mg $CN^-$ auf 3,35 mg $CN^-$, also um 95 %, erzielt worden. Mit anderen Worten: die erneute Bildung von komplexen Schwermetallcyaniden ist durch die Zugabe von Formaldehyd verhindert worden.

Nach der oxidativen Behandlung dieses Abwassers mit $H_2O_2$ konnte der Gehalt an Gesamtcyanid auf < 1 mg $CN^-$/l und der Gehalt an leicht freisetzbarem Cyanid nach DIN 38 405, D 13.2, auf < 0,1 mg $CN^-$/l abgesenkt werden.

Beispiel 2

In Beispiel 2 soll die Bedeutung der Einstellung des pH-Wertes für exakte Formaldehyddosierung gezeigt werden, wie sie später in den Beispielen 5 und 6 an dem Meßstrom vorgenommen wird.

Beispiel 2 wird noch ohne Meßstrom durchgeführt.

Ein Waschkreislauf von 4000 m³ Inhalt und einer Umwälzung von 1400 m³/h hatte folgende Zusammensetzung:

| | |
|---|---|
| Direkt argentometrisch bestimmbares Cyanid | 260 mg $CN^-$/l |
| Gesamtcyanid, DIN 38 405, D 13.1 | 325 mg $CN^-$/l |
| leicht freisetzbares Cyanid, DIN 38 405, D 13.2 | 264 mg $CN^-$/l |
| Mangan | 1,2 mg Mn/l |
| komplexes Eisencyanid | 110 mg $CN^-$/l |

Dem Kreislauf wurden innerhalb 3 Stunden 2500 l $H_2CO$ (37 gew.-%ig) zugesetzt und danach kontinuierlich 20 kg $H_2CO$ (37 gew.-%ig) zudosiert.

In Abhängigkeit von der Zeit veränderte sich das Abwasser, aus dem stündlich 20 m³ abgeschlämmt und durch Frischwasser ersetzt wurden, innerhalb 72 Stunden wie folgt:

Tabelle

| Zeit Std. | Cyanid gesamt mg $CN^-$/l | Cyanid, leicht freisetzbar mg $CN^-$/l | Mangan mg Mn/l | Cyanid als $Fe(CN)_6$ mg $CN^-$/l | Form-aldehyd-Zugabe |
|---|---|---|---|---|---|
| 0 | 325 | 264 | 1,2 | 110* | 2750 kg |
| 24 | 245 | 187 | 0,7 | n.b.** | 20 kg/h |
| 29 | n.b. | n.b. | – | 77,5* | 20 kg/h |
| 48 | 193 | 156 | 0,4 | 42,6* | 20 kg/h + 950 kg |
| 51 | 214 | 171 | 0,3 | 40,6* | 20 kg/h |
| 72 | 272 | 208 | 0,2 | 38,5* | 20 kg/h |

\* = errechnet aus Fe-Gehalt (AAS = Atomabsorptionsspektroskopie)
\*\* = nicht bestimmt

Insgesamt wurden innerhalb von 48 Stunden 4000 m³ Waschwasser + 960 m³ ausgeschleustes Wasser mit $H_2CO$ behandelt. Dazu wäre bei einem durchschnittlichen Gehalt von 250 mg $CN^-$/l der Einsatz von 3820 kg $H_2CO$ (37 gew.-%ig) erforderlich gewesen. Eingesetzt wurden insgesamt 4850 kg. Die etwas höhere Dosiermenge war darauf zurückzuführen, dass der Waschkreislauf einen pH-Wert von 10,1 bis 10,5 hatte und nicht verändert wurde. Dies führte zu einer ungünstigen Beeinflussung des Redoxpotentials und damit zur Überdosierung von $H_2CO$, bezogen auf den Cyanidgehalt.

Obwohl der Kreislauf nur zu ca. 22 % durch Frischwasser ersetzt wurde, konnte durch die $H_2CO$-Dosierung nicht nur eine entscheidende Verbesserung des Absetzverhaltens der Schwebstoffe, sondern auch eine Absenkung des Mangangehaltes um mehr als 80 % und des Gehaltes an komplexem Eisencyanid um 65% erzielt werden.

Die folgenden Beispiele 3 und 4 sind Laboratoriumsversuche zur Ermittlung des Einflusses grosser Ammoniakkonzentrationen auf die erforderliche Dosiermenge an Formaldehyd:

Beispiel 3

4 Liter einer Lösung mit 300 mg CN⁻/l, 4000 mg NH₃/l und 1 mg Ag/l wurden mit Salzsäure (25 gew.-%ig) auf einen pH-Wert von 8,5 eingestellt und portionsweise mit H₂CO (37 gew.-%ig) versetzt. Dabei stieg das mit einer Au/Thalliumamalgam-Thalliumchlorid-Meßkette gemessene Redoxpotential bereits nach Zugabe von 4 % H₂CO d. Th., bezogen auf den Cyanid- und den Ammoniak-Gehalt, von + 380mV auf + 675 mV an und veränderte sich bis zu einer Zugabe von 30 % d.Th. an H₂CO praktisch nicht mehr. 4 % H₂CO d.Th. entsprechen 126 % d. Th., bezogen auf das Cyanid; 30 % d. Th. an H₂CO entsprechen aber bereits 950 % d. Th., bezogen auf das Cyanid.

Aus dem Beispiel 3 geht hervor, dass selbst bei hohen Ammoniakgehalten der eingesetzte Formaldehyd bevorzugt zur Cyanidumwandlung verbraucht wird. Dies zeigt sich an dem nicht mehr veränderten Potential. Der überschüssige Formaldehyd wird zu Hexamethylentetramin umgesetzt.

Beispiel 4

Eine Lösung gemäss Beispiel 3 (pH-Wert = 8 bis 8,5) wurde mit 1,38 g H₂CO entsprechend 100 % d. Th., bezogen auf Cyanid, versetzt und der Verlauf des Redoxpotentials gemessen. Das Anfangspotential von + 380 mV stieg zunächst schnell auf + 580 mV an; nach insgesamt 2 Minuten war das Endpotential von + 670 mV erreicht. Mit nur 100 % d.Th. wird also der gleiche Endwert erreicht wie in Beispiel 3 mit 950 % d. Th. Es handelt sich also um eine absolut sichere Steuermethode.

Durch nachfolgende Zugabe von 120 % d. Th. an wäßrigem Wasserstoffperoxid (50 gew.-%ig), bezogen auf das Cyanid, veränderte sich dieses Potential nicht. Erst durch Zugabe der 3,8fachen Mengen an H₂O₂, bezogen auf das Cyanid, erfolgte bei pH 8,5 ein Potentialanstieg auf + 700 mV und blieb über 2 Stunden konstant.

Damit ist sichergestellt, dass das Verfahren zur Steuerung der Formaldehyddosierung auch dann einwandfrei arbeitet, wenn im pH-Bereich von 8 bis 8,5 große Überschüsse an Oxydationsmitteln vorliegen.

Die so behandelte Lösung wurde nun mit wäßriger Natronlauge (10 gew.-%ig) auf pH 10.5 eingestellt. Hierbei fiel das Potential auf + 400 mV ab. Durch Perhydrolyse des Glycolnitrils mit dem H₂O₂ erfolgte aber innerhalb von 10 Minuten ein Anstieg des Potentials auf + 750 mV, wodurch das Ende der Entgiftung signalisiert wurde. Mit dem Pyridin-Barbitursäure-Reagens konnte analytisch nachgewiesen werden, dass der Cyanidgehalt auf < 0,1 mg CN⁻/l abgebaut war.

Nach diesem Beispiel ist es erforderlich, lediglich einen kleinen Teilstrom des Waschkreislaufes abzuzweigen und zu konditionieren. Dabei kann die Messung des zur automatischen H₂CO-Dosierung genutzten Redoxpotentials bei pH 8,5 auch in Gegenwart von Oxidationsmittel, wie z.B. H₂O₂, vorgenommen werden. Dadurch ist es möglich, wenn sich der pH-Wert des Kreislaufes – wie zum Beispiel bei der Ferromangan-Herstellung – automatisch auf 10 bis 11 einstellt, die oxidative Behandlung bereits im Kreislauf vorzunehmen und das ausgespeiste Wasser, falls erforderlich, nur noch nachzubehandeln.

Beispiele 5 und 6 sind Praxisbeispiele nach dem erfindungsgemäßen Verfahren gemäß Abbildung 1 und 2.

Beispiel 5

Ein Kühlkreislauf (Abb. 1) mit 4200 m³ Inhalt, 800 m³ Umwälzung/h sowie 100 m³ Abschlämmung pro Stunde hatte folgende Zusammensetzung:

| | |
|---|---|
| Gesamtcyanid, DIN 38 405, D 13.1 | 78,5 mg CN⁻/l |
| leicht freisetzbares Cyanid, DIN 38 405, D 13.2 | 67,4 mg CN⁻/l |
| Ammoniak | 35 mg NH₃/l |
| pH-Wert | 9,8 |

Diesem Kühlkreislauf wurde nach dem Gaswäscher ein Meßstrom von 100 l/h entnommen und kontinuierlich über einen elektronischen pH-Regler gesteuert durch Zudosierung von Salzsäure auf pH 8 bis 8,5 eingestellt. Gleichzeitig wurde eine Silbernitratlösung zudosiert, um eine Ag-Konzentration von 1 µg/l aufrechtzuerhalten. Durch Messung des Redoxpotentials mit einem Au/Thallium/Thalliumchlorid-Elektrodenpaar wurde vor dem Gaswäscher durch einen elektronischen Redox-Regler gesteuert-so viel wäßrige Formaldehydlösung (37 gew.-%ig) zudosiert, bis ein konstantes Redoxpotential von + 675 mV nach dem Gaswäscher eingehalten wurde.

Gleichzeitung wurde mit einer zweiten Au/Th-Th-Redox-Meßkette das Redoxpotential nach dem Gas-

EP 0 223 904 B1

wäscher im Hauptstrom gemessen. Entsprechend dem gemessenen Redoxpotential im Hauptstrom bei pH 9,8 wurde dem Hauptstrom vor dem Gaskühler so viel $H_2O_2$ zudosiert, bis ein konstant bleibendes Redoxpotential von + 750 mV erreicht war.

Durch diese Meß- und Dosieranordnung wurden folgende Dosiermengen und Wirkwerte ermittelt:

Formaldehyd-Dosierung über 16 Stunden:

$$\text{durchschnittlich } 20,2 \text{ 1/h, } (37 \text{ gew.-\%ig}) \;\; \hat{=} \; 7,12 \text{ kg CN}^-/\text{h}$$

$$100 \text{ m}^3 \text{ Abwasser/h mit } 67,4 \text{ mg CN}^-/\text{1} \;\; \hat{=} \; 6,74 \text{ kg CN}^-/\text{h}$$

$$\text{Formaldehyd-Einsatz:} \qquad 105 \text{ \% d. Th. bezogen auf CN}^-$$

$H_2O_2$-Dosierung über 16 Stunden:
durchschnittlich 30 l (50 gew.-%ig)/h

Der Cyanidgehalt am Überlauf nach dem Gaskühler schwankte zwischen 0,1 und 0,3 mg CN$^-$/l; am Zulauf in den Werksablauf (l std. Verweilzeit) wurden stets Werte < 0,1 mg CN$^-$/l registriert.

Beispiel 6

Ein Waschkreislauf (Abb. 2) von 5 m³ Inhalt und einer Umwälzung von 60 m³/h hatte folgende Zusammensetzung:

| | |
|---|---|
| Direkt argentometrisch bestimmbares Cyanid (Durchschnitt über 16 Stunden) | 535 mg CN$^-$/l |
| Ammoniak (Durchschnitt über 16 Stunden) | 3650 mg NH$_3$/l |
| pH-Wert | 7,9 |

Dem Kreislauf wurde vor dem Wäscher ein Meßstrom von l00 l/h entnommen und kontinuierlich über einen elektronischen pH-Regler gesteuert durch Zudosieren von Natronlauge ( 10 gew.-%ig) auf pH 8 bis 8,5 eingestellt. Gleichzeitig wurde eine Silbernitratlösung zudosiert, um eine Ag-Konzentration von 1 μ Ag/l aufrechtzuerhalten. Durch Messung des Redoxpotentials mit einem Au/Thalliumamid-Thalliumchlorid-Elektrodenpaar wurde vor dem Gaswäscher durch einen elektronischen Redox-Regler gesteuert so viel $H_2CO$ (37 gew.-%ig) zudosiert, bis ein konstantes Redoxpotential von + 675 mV nach dem Gaswäscher eingehalten wurde. Es wurden 2 m³ Waschwasser/h durch Frischwasser ersetzt. Durch diese Anordnung der Meß-und Dosiereinrichtung wurde folgende Dosiermenge an $H_2CO$ (37 gew.-%ig) benötigt: Durchschnittlich pro Stunde wurden 3,2 1 $H_2CO$ (37 gew.-%ig) dosiert; das sind 106 % d. Th., bezogen auf den Cyanidgehalt des ausgespeisten Waschwassers.

Das ausgespeiste Waschwasser wurde nach Abtrennung der Schwebstoffe zunächst mit Matronlauge auf einen pH-Wert von 10,5 eingestellt und danach durch Redox-Messung mit einem Au/Thalliumamid-Thalliumchlorid-Elektrodenpaar über einen elektronischen Regler gesteuert so viel $H_2O_2$ (50 gew.-%ig) zudosiert, bis das Redoxpotential auf + 750 mV angestiegen war und bei der kontinuierlichen Abwasserbehandlung auf diesem Wert gehalten wurde. Nach einer Gesamtreaktionszeit von 3,5 Stunden konnte — entsprechend der vorgesehenen Anlagengröße — erst auf einen pH-Wert von 8,5 rückneutralisiert werden. Der Cyanidgehalt im ersten Reaktionsbecken (ca. 1 Std. Reaktionszeit) war stets < 0,1 mg CN$^-$/l.

**Patentansprüche**

1. Verfahren zur Reinigung von Industriegasen oder -abgasen, die Cyanwasserstoff und bevorzugt Ammoniak enthalten, und in denen auch Kohlendioxide, Kohlenwasserstoffe verschiedener Struktur, Schwefelwasserstoff, Schwefeloxide sowie schwermetallhaltige Stäube anwesend sein können, durch eine Kreislaufwäsche mit Wasser und Formaldehyd, sowie einer gleichzeitigen Oxidation des Kreislaufwassers oder anschließenden oxidativen Behandlung des aus dem Kreislauf ausgeschleusten Waschwassers, wobei in beiden Fällen eine biologische Nachreinigung angeschlossen werden kann, dadurch gekennzeichnet, dass man den Formaldehyd vor dem Gaswäscher in den Gaswaschkreislauf zudosiert und die Zugabemenge über eine kontinuierliche Messung des Redoxpotentials mit einem Elektrodenpaar, bestehend aus einer Edelmetall-und einer Bezugselektrode, in einem nach dem Wäscher abgezweigten kontinuierlichen Nebenstrom (=Meßstrom), dessen pH-Wert durch Zudosieren von Lauge oder Säure auf einen konstanten Wert zwischen 7 und 10, vorzugsweise 8 bis 8,5, eingestellt wird, in Gegenwart von mindestens 1 ppb Silberionen regelt.

2. Verfahren nach Anspruch 1, dadurch gekennzeichnet, dass die Redox-Messung in einem Durchflußmeßwertgeber durchgeführt wird, der mit einer pH-Einstabmeßkette, einer Goldelektrode und einer Thalamidelektrode ausgerüstet ist.

3. Verfahren nach Anspruch 1 oder 2, dadurch gekennzeichnet, dass bei Verwendung eines Gold-Thalamid-Elektrodenpaares der Redox-Sollwert bei pH-Wert 7 bis 10, bevorzugt 8 bis 8,5, auf + 400 mV ± 50 mV bis +1000 mV ± 50 mV eingestellt wird.

4. Verfahren nach Anspruch 2 oder 3, dadurch gekennzeichnet, dass der Redox-Sollwert auf einen Wert von + 650 mV ± 50 mV bis + 850 mV ± 50 mV, besonders bevorzugt auf einen Wert von + 700 mV ± 50 mV eingestellt wird bei einem pH-Wert von 8 bis 8,5.

5. Verfahren nach einem derAnsprüche 1 bis 4, dadurch gekennzeichnet, dass man zur Ansteuerung der Formaldehyd-Dosierpumpe einen elektronischen Regler mit P-, PI- oder PID-Verhalten einsetzt, der die Pumpleistung entsprechend der Sollwertabweichung des Redoxpotentials regelt.

6. Verfahren nach einem der Ansprüche 1 bis 5, dadurch gekennzeichnet, dass man dem Meßstrom maximal 10 ppb, vorzugsweise 1 ppb, Silberionen zusetzt.

7. Verfahren nach einem der Ansprüche 1 bis 6, dadurch gekennzeichnet, dass man den aus dem Kreislauf nach der Behandlung ausgeschleusten Anteil an Abwasser auf einen pH-Wert von 8,5 bis 12,5 einstellt und zur vollständigen Hydrolyse des gebildeten Glykolsäurenitrils mit einem Oxydationsmittel, vorzugsweise Wasserstoffperoxid, behandelt.

## Claims

1. Process for the purification of industrial gases or industrial waste gases which contain hydrogen cyanide and preferably ammonia, and in which carbon oxides, hydrocarbons of various structures, hydrogen sulphide, sulphur oxides and dusts containing heavy metals may also be present, by circulatory washing with water and formaldehyde and simultaneous oxidation of the circulating water or subsequent oxidative treatment of the washing water sluiced out of the circulation, it being possible for a biological after-purification to follow in both cases, characterized in that the formaldehyde is metered into the gas washing circulation upstream of the gas washer and the amount added is regulated via continuous measurement of the redox potential with an electrode pair consisting of a noble metal electrode and a reference electrode in a continuous side stream (=measurement stream) which is diverted downstream of the washer and has a pH which is adjusted to a constant value of between 7 and 10, preferably 8 to 8.5, by metering in alkali or acid, in the presence of at least 1 ppb silver ions.

2. Process according to claim 1, characterized in that the redox measurement is carried out in a flow measurement transducer equipped with a single-rod pH measurement chain, a gold electrode and a thalamide electrode.

3. Process according claim 1 or 2, characterized in that when a gold-thalamide electrode pair is used, the theoretical redox value at pH 7 to 10, preferably 8 to 8.5, is set at + 400 mV ± 50 mV to +1,000 mV + 50 mV.

4. Process according to claim 2 or 3, characterized in that the theoretical redox value is set at a value of + 650 mV ± 50 mV to + 850 mV ± 50 mV, particluarly preferably at a value of +700 mV ± 50 mV, at a pH of 8 to 8.5.

5. Process acording to one of claims 1 to 4, characterized in that an electronic regulator with P, PI or PID properties which regulates the pump output according to the deviation in the theoretical value of the redox potential is employed to activate the formaldehyde metering pump.

6. Process according to one of claims 1 to 5, characterized in that a maximum of 10 ppb, preferably 1 ppb, silver ions is added to the Measurement stream.

7. Process according to one of claims 1 to 6, characterized in that the portion of effluent sluiced out of the circulation after the treatment is brought to a pH of 8.5 to 12.5 and treated with an oxidizing agent, preferably hydrogen peroxide, for complete hydrolysis of the glycollic acid nitrile formed.

## Revendications

1. Procédé pour l'épuration de gaz industriel ou de gaz industriels rejetés contenant de l'acide cyanydrique et de préférence de l'ammoniac, et dans lesquels peuvent également être présents des oxydes de carbone, des hydrocarbures de structure variée, de l'hydrogène sulfuré, des oxydes de soufre ainsi que des poussières contenant des métaux lourds, par un lavage en circuit avec de l'eau et du formaldéhyde, ainsi qu'une oxydation simultanée de l'eau en circuit ou un traitement oxydant subséquent de l'eau de lavage expulsée hors du circuit, une post-épuration biologique pouvant faire suite dans les deux cas, caractérisé en ce qu'est introduit, le formaldéhyde avant le laveur de gaz dans le circuit de lavage du gaz et que la quantité ajoutée est réglée au moyen d'une mesure en continu du potentiel redox à l'aide d'une paire d'electrodes constituée d'une électrode à métal noble et d'une électrode de référence, dans un courant secondaire (= courant de mesure) continu, dérivé après le laveur, courant secondaire dont le pH est ajusté à une valeur constante comprise entre 7 et 10, de préférence entre 8 et 8,5, par addition réglée d'une solution alcaline ou d'acide, en présence d'au moins 1 ppb d'ions argent.

2. Procédé selon la revendication 1, caractérisé en ce que la mesure du potentiel redox est effectuée dans un régulateur de débit qui est muni d'une chaîne de mesure du pH, d'une électrode à or et d'une électrode à amidure de thallium.

3. Procédé selon la revendication 1 ou 2, caractérisé en ce qu'est utilisée un paire d'électrodes à l'amidure de thallium- or, à un pH de 7 à 10, de préférence de 8 à 8,5, la valeur de consigne du potentiel redox étant réglée à une valeur de + 400 mV ± 50 mV à +1000 mV ± 50 mV.

4. Procédé selon la revendication 2 ou 3, caractérisé en ce que, à un pH de 8 à 8,5, la valeur de consigne du potentiel redox est réglée à une valeur de + 650 mV ± 50 mV à + 850 mV ± 50 mV, de préférence à une valeur de + 700 mV ± 50 mV.

5. Procédé selon l'une quelconque des revendications 1 à 4, caractérisé en ce que pour l'activation de la pompe doseuse pour l'addition de formaldéhyde, est utilisé un régulateur électronique à fonctionnement P, PI ou PID (proportionnel, proportionnel-intégral ou proportionnel-intégral-différentiel) qui règle la puissance de la pompe en fonction de l'écart du potentiel redox par rapport à la valeur de consigne.

6. Procédé selon l'une quelconque des revendications 1 à 5, caractérisé en ce qu'il est ajouté au courant de mesure 10 ppb au maximum, de préférence 1 ppb d'ions d'argent.

7. Procédé selon l'une quelconque des revendications 1 à 6, caractérisé en ce qu'est ajustée à un pH de 8,5 à 12,5 la portion d'eau résiduaire expulsée hors du circuit après le traitement et qu'elle est traitée par un oxydant, de préférence le peroxyde d'hydrogène, pour l'hydrolyse totale du nitrile glycolique formé.

Fig. 1

EP 0 223 904 B1

Fig. 2